# EUROPEAN PATENT SPECIFICATION

(11) **EP 0 683 093 B1**
(45) Date of publication and mention of the grant of the patent: **27.10.1999**
(21) Application number: 95106200.9
(22) Date of filing: 25.04.1995
(51) Int. Cl.: B62M 23/02

(54) **Pedaling force detector for motor-assisted bicycle**
Pedalkraftdetektor für Fahrrad mit Hilfsmotor
Détecteur de force de pédalage pour bicyclette assistée à moteur

(30) Priority: 18.05.1994 JP 10415294
(43) Date of publication of application: 22.11.1995
(73) Proprietor: HONDA GIKEN KOGYO KABUSHIKI KAISHA, Minato-ku Tokyo (JP)
(72) Inventor: Kuroki, Masahiro, 4-1, Chuo 1-chome, Wako-shi, Saitama (JP); Soda, Hajime, 4-1, Chuo 1-chome, Wako-shi, Saitama (JP)
(74) Representative: Fincke, Karl Theodor, Dipl.-Phys. Dr.

(56) References cited:
- EP-A- 0 569 954
- DE-A- 3 708 103

## Description

The present invention relates to a pedaling force detector for a motor-assisted bicycle, said bicycle having a power transmission system for transmitting a pedaling force applied to crank pedals to a wheel, incorporating an assistive motor, and the output of the assistive motor is controlled on the basis of the pedaling force detected by a pedaling force detecting means.

Pedaling force detectors for such a motor-assisted bicycle are disclosed in Japanese Patent Laid-open (Kokai) Nos. 5-58379, 4-100790 and 4-244496.

The pedaling force detector disclosed in Japanese Patent Laid-open (Kokai) No. 5-58379 detects a pedaling force applied to the crank pedals on the basis of the reaction of the sun of a planetary gear train. Since this known pedaling force detector has a complex, heavyweight construction and the planetary gear train must be driven by rider's power when the assistive motor is not used, the pedaling force detector causes a large loss of mechanical energy.

The pedaling force detector disclosed in Japanese Patent Laid-open (Kokai) No. 4-100790 detects the pedaling force on the basis of the angle of torsion of a drive shaft connecting the crank axle to the rear wheel, and this pedaling force detector cannot be applied to general chain-drive bicycles.

The pedaling force detector disclosed in Japanese Patent Laid-open (Kokai) No. 4-244496 detects the pedaling force on the basis of the tension of the chain connecting the crank axle and the rear wheel. This a pedaling force detected by this pedaling force detector includes errors attributable to the elongation of the chain due to stress induced in the chain during extended period of use and to an inappropriate initial tension of the chain.

From EP 0 569 954 A1 there is known an electrically assisted pedal operated vehicle in which the pedaling force applied by the vehicle rider is detected and an electric motor is operated in response to the detected pedaling force so as to provide an assisting force for driving the vehicle.

DE 37 08 130 A1 discloses a device for measuring a torque in which two machine parts are relatively rotatable. The relative rotation of these machine parts is transduced into an amplified axial movement and the axial movement corresponds to the torque to be transmitted.

The present invention has been made in view of the foregoing problems and it is therefore an object of the present invention to provide a pedaling force detector for a motor-assisted bicycle, having a compact, lightweight construction, and capable of reducing loss of mechanical energy and of accurately detecting the pedaling force.

This object is solved by means of a pedaling force detector arrangement for a motor-assisted bicycle, the motor-assisted bicycle comprising:
a power transmission system for transmitting a pedaling force applied to crank pedals, to a wheel and an assistive motor incorporated into the power transmission system, an output of said assistive motor being controlled on the basis of a pedalling force applied to the crank pedals and detected by a pedalling force detecting arrangement,
   said pedalling force detector arrangement comprising:
a crank axle driven for rotation by operating the crank pedals,
a torsion bar disposed coaxially within said crank axle, a first end of said torsion bar being connected to the crank axle and a second end of said torsion bar being connected to the assistive motor and the wheel,
a converting means for converting the angle of torsion of the torsion bar into a corresponding axial displacement of a displacement means with respect to said crank axle,
a displacement sensor for detecting the axial displacement of the displacement means.

According to a first preferred embodiment, the converting means comprises:
a driving member fitly put on the crank axle so as to be rotatable relative to the crank axle and to be restrained from axial sliding, and connected to the second end of the torsion bar, and a driven member fitly put on the crank axle so as to be axially slidable and to be restrained from rotation relative to the crank axle, and interlocked with the driving member by a cam mechanism, the driven member being movable axially on the crank axle as said displacement means in accordance with the torsion of the torsion bar.

According to a second preferred embodiment, the converting means comprises:
a driving member fitly put on the crank axle so as to be rotatable relative to the crank axle and to be restrained from axial sliding, and connected to the second end of the torsion bar, an arm holder fitly put on the crank axle so as to be restrained from rotation and sliding relative to the crank axle, and arm members having driving arms pivotally supported at their middle parts on the arm holder, extended axially of the crank axle and in engagement with the driving member, and driven arms extended radially of the crank axle, said driven arms being axially displaceable as said displacement means with respect to the crank axle in accordance with the torsion of the torsion bar.

Therefore, the torsional angle of the torsion bar can be accurately converted into the axial displacement of the driven arms and hence the pedaling force applied to the crank pedals can be accurately detected.

Preferred embodiments of the present invention will be described hereinafter with reference to the accompanying drawings.
Fig. 1 is a general side view of a bicycle incorporating a first embodiment of the present invention.
Fig. 2 is an enlarged sectional view taken on line 2-2 in Fig. 1.
Fig. 3 is a sectional view taken on line 3-3 in Fig. 2.
Fig. 4 is a sectional view taken on line 4-4 in Fig. 3.
Fig. 5 is an enlarged sectional view taken on line 5-5 in Fig. 2.
Fig. 6 is an enlarged view of a portion indicated at 6 in Fig. 4.
Fig. 7 is a diagrammatic view taken along the direction of the arrow 7 in Fig. 1.
Fig. 8 is a block diagram of a control system.
Fig. 9 is a general side view of a bicycle incorporating a second embodiment of the present invention.
Fig. 10 is an enlarged sectional view taken on line 10-10 in Fig. 9.
Fig. 11 is a sectional view taken on line 11-11 in Fig. 10.
Fig. 12 is a sectional view taken on line 12-12 in Fig. 10.
Fig. 13 is a sectional view taken on line 13-13 in Fig. 10.

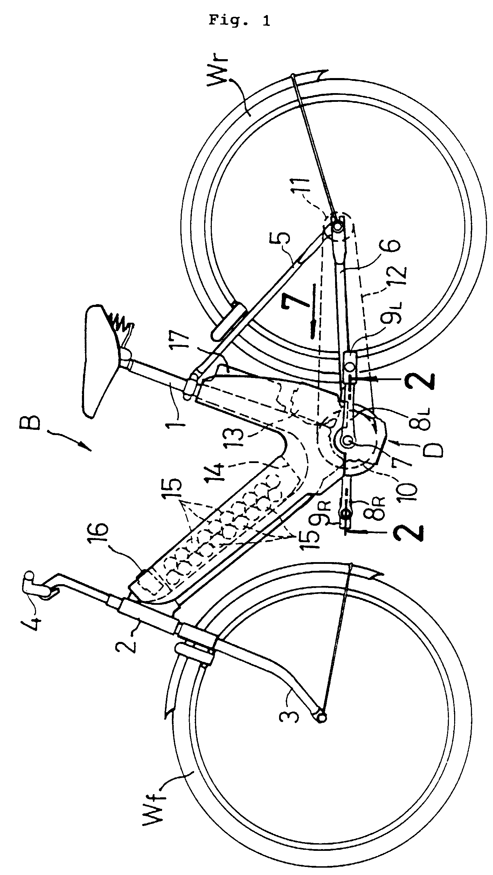

Referring to Fig. 1, a bicycle B has a main frame 1 having a V-shape in a side view, a front fork 3 is supported for turning on a head pipe 2 attached to the front end of the main frame 1, a handlebar 4 is attached to the upper end of the front fork 3, and a front wheel Wf is supported on the lower end of the front fork 3. A rear fork 6 extended backward from a part of the main frame 1 near the lower end of the main frame 1 is held rigidly in position by stays 5, and a rear wheel Wr is supported on the rear fork 6. A crank axle 7 is supported for rotation on the lower end of the main frame 1, a pair of crank arms 8_{R} and 8_{L} are mounted on the crank axle 7, and crank pedals 9_{R} and 9_{L} are attached to the free ends of the crank arms 8_{R} and 8_{L} respectively. A chain 12 is extended between a driving sprocket 10 driven for rotation by the crank axle 7 and a driven sprocket 11 mounted on the axle of the rear wheel Wr. When a pedaling force is applied to the crank pedals 9_{R} and 9_{L} to rotate the crank axle 7, the rotation of the crank axle 7 is transmitted through the driving sprocket 10, the chain 12 and the driven sprocket 11 to the rear wheel Wr.

An assistive motor 13 connected to the driving sprocket 10 disposed in the lower part of the main frame 1 generates an assistive driving force for assisting a pedaling force applied to the crank pedals 9_{R} and 9_{L}. A battery 15 comprising a plurality of Ni-Cd cells, i.e., a power supply for supplying power to drive the assistive motor 13, is contained in a battery box 14 disposed in the front part of the main frame 1. A main switch 16 is attached to the front wall of the battery box 14. A controller 17 comprising an electronic control unit for controlling the assistive motor 13, and a motor driver is disposed in the rear part of the main frame 1.

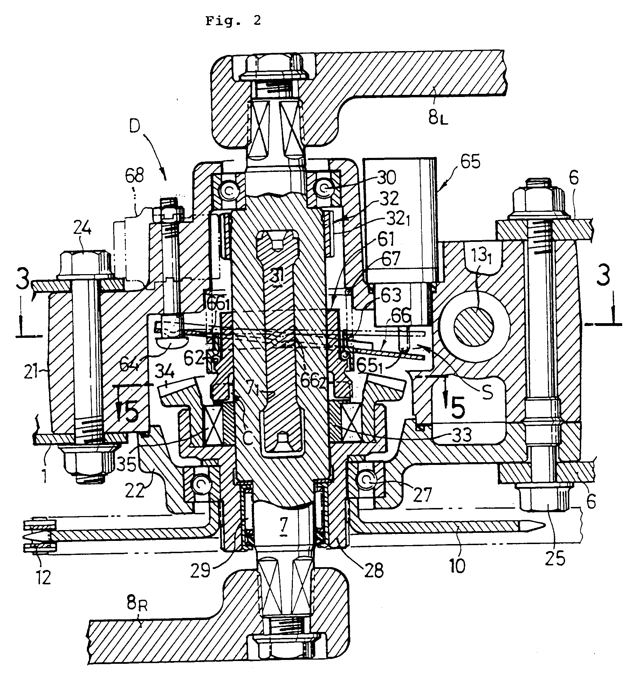

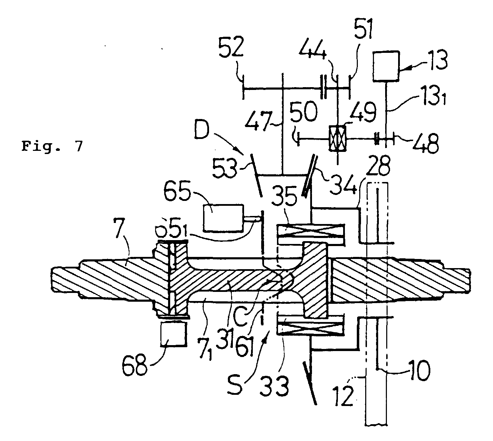

A driving mechanism D included in the bicycle B will be described in detail hereinafter with reference to Figs. 2 to 7.

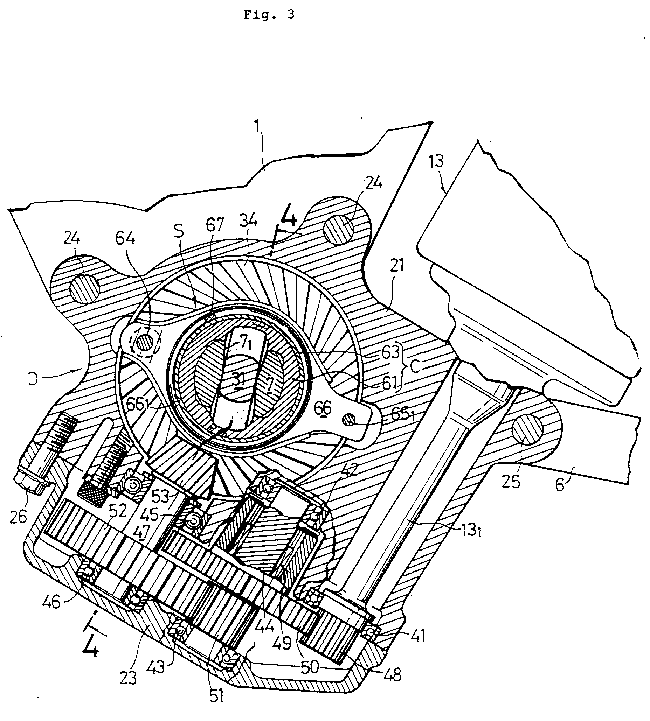

A gear housing containing the driving mechanism D comprises a left housing member 21, i.e., a main housing member, a right housing member 22 attached to the right open end of the left housing member 21, and a lower housing member 23 joined to the lower surface of the left housing member 21. The left housing member 21 is fastened at its front upper part to the lower end of the main frame 1 with two bolts 24, and both the respective rear parts of the left housing member 21 and the right housing member 22 are fastened to the front end of the rear fork 6 with a single bolt 25. The lower housing member 23 is fastened to the lower surface of the left housing member 21 with a plurality of bolts 26 (only one of the bolts 26 is shown in Fig. 3).

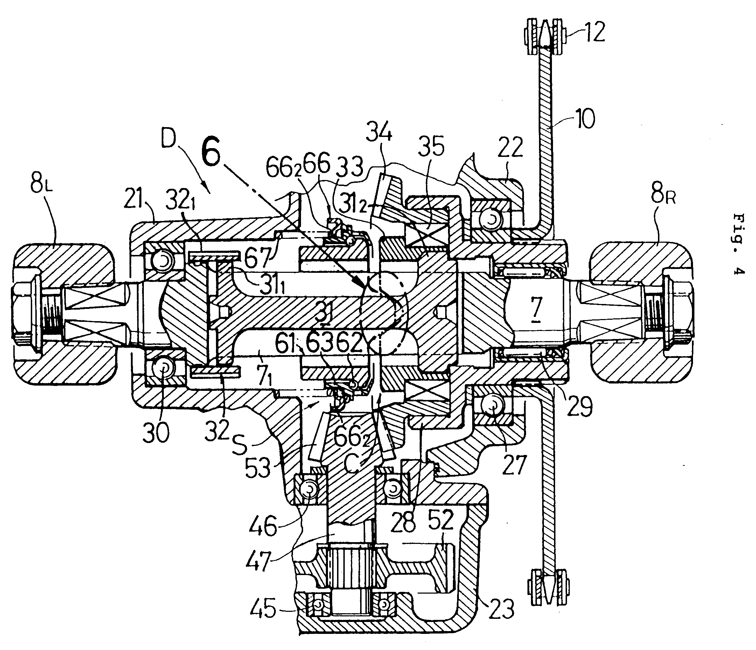

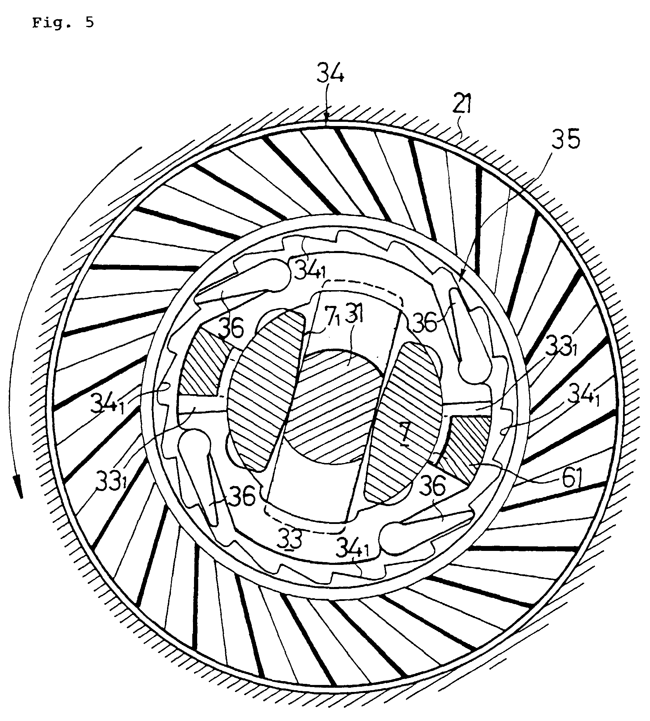

The right end of the crank axle 7 is supported in a roller bearing 29 fitted in a sleeve 28 supported in a ball bearing 27 on the right housing member 22, and the left end of the crank axle 7 is supported in a ball bearing 30 on the left housing member 21. The crank axle 7 is provided in its middle part with an axially elongate through hole 7₁ diametrically extending through the crank axle 7. A torsion bar 31 is placed in the through hole 7₁ coaxially with the crank axle 7. An expanded head 31₁ formed at the left end (input end) of the torsion bar 31 is connected to the crank axle 7 with a collar 32, and an expanded head 31₂ formed at the right end (output end) of the torsion bar 31 is press-fitted in a groove formed in the inner circumference of an annular driving member 33 as shown in Fig. 4. As best shown in Fig. 5, the opposite side surfaces of the through hole 7₁ of the crank axle 7 are curved substantially in the shape of a circular arc to enable the head 31₂ on the free end of the torsion bar 31 to turn through a predetermined angle relative to the head 31₁ on the fixed end, and to prevent the breakage of the torsion bar 31 by limiting a maximum angle of torsion of the torsion bar 31 when an excessively large load acts on the torsion bar 31.

A first overrunning clutch 35 is disposed between a bevel gear 34 fixed to the inner circumference of the sleeve 28 and the driving member 33. As is obvious from Fig. 5, the first overrunning clutch 35 comprises four pawls 36 pivotally supported on the periphery of the driving member 33 and biased radially outward with springs, not shown, and a plurality of ratchet teeth 34₁ formed in the inner circumference of the bevel gear 34.

When the crank axle 7 is rotated in the normal direction by working the crank pedals 9_{R} and 9_{L}, the torque of the crank axle 7 is transmitted through the torsion bar 31, the driving member 33, the first overrunning clutch 35, the bevel gear 34 and the sleeve 28 to the driving sprocket 10 splined to the outer circumference of the sleeve 28. When the crank axle 7 is rotated in the reverse direction by working the crank pedals 9_{R} and 9_{L}, the first overrunning clutch 35 allows the crank axle 7 to rotate freely in the reverse direction.

As best shown in Fig. 3, the assistive motor 13 is held on the left housing member 21 so that the output shaft 13₁ thereof extends obliquely forward and downward, and the free end of the output shaft 13₁ is supported in a ball bearing 41 on the lower end of the left housing member 21. A first intermediate shaft 44 is supported in a pair of ball bearings 42 and 43 on the left housing member 21 and the lower housing member 23, and a second intermediate shaft 47 is supported in a pair of ball bearings 45 and 46 on the left housing member 21 and the lower housing member 23. A spur gear 48 fixed to the output shaft 13₁ of the assistive motor 13 is in engagement with a spur gear 50 mounted on a second overrunning clutch 49 coupled with the first intermediate shaft 44, a spur gear 51 fixed to the first intermediate shaft 44 is in engagement with a spur gear 52 fixed to the second intermediate shaft 47, and a bevel gear 53 fixed to the second intermediate shaft 47 is in engagement with the bevel gear 34 fixed to the sleeve 28.

When the assistive motor 13 is driven, the torque of the output shaft 13₁ is transmitted through the four spur gears 48, 50, 51 and 52, the two bevel gears 53 and 34 and the sleeve 28 to the driving sprocket 10. The second overrunning clutch 49 allows the driving sprocket 10 to be rotated freely by working the crank pedals 9_{R} and 9_{L} relative to the output shaft 13₁ when the assistive motor 13 stops due to the exhaustion of the battery 15.

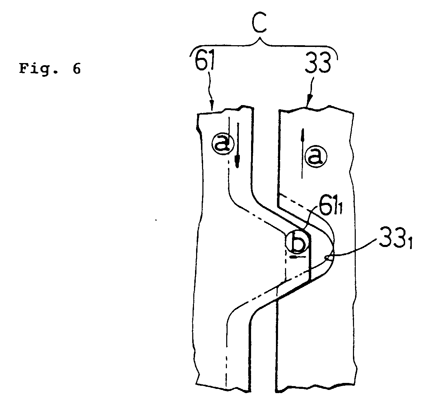

A pedaling force detecting means S for detecting a pedaling force applied to the crank pedals 9_{R} and 9_{L} has an inner slider 61 fitly put on the crank axle 7 so as to be axially slidable and rotatable together with the crank axle 7. An outer slider 63 is supported on a plurality of balls 62 seated on the flange of the inner slider 61 for rotation relative to the inner slider 61. As is obvious from Fig. 6, a pair of concave cam surfaces 33₁ are formed on a diameter in the end surface of the driving member 33 facing the inner slider 61, and a pair of convex cam surfaces 61₁ are formed in the end surface of the inner slider 61 so as to be in engagement with the concave cam surfaces 33₁. The driving member 33 and the inner slider 61 are the components of a converting means C in accordance with the present invention.

A pivot bolt 64 and a stroke sensor 65 are disposed on the opposite sides, respectively, of the crank axle 7 on the left housing member 1. A sensor am 66 has one end pivotally connected to the pivot bolt 64 and the other end in contact with the detecting rod 65₁ of the stroke sensor 65. The sensor arm 66 is provided in its middle part with an opening 66₁ (Fig. 2) through which the crank axle 7, the inner slider 61 and the outer slider 63 extend. A pair of projections 66₂ (Fig. 4) project radially inward from the edge of the opening 66₁. A spring 67 is compressed between the pair of projections 66₂ and the left housing member 21 to bias the sensor arm 66 to the right as viewed in Fig. 4. Consequently, the pair of projections 66₂ of the sensor arm 66 push the outer slider 63 against the balls 62, whereby the inner slider 61 is pressed against the driving member 33 so that the cam surfaces 33₁ of the driving member 33 are resiliently in contact with the cam surfaces 61₁ of the inner slider 61.

A crank axle speed sensor 68 is held on the left housing member 21 opposite to a toothed part 32₁ formed on the outer surface of the collar 32 coupling together the crank axle 7 and the head 31₁ of the torsion bar 31 to detect the rotating speed of the crank axle 7.

The operation of the first embodiment of the present invention thus constructed will be described hereinafter.

When the crank pedals 9_{R} and 9_{L} are worked to pedal the bicycle, the crank arms 8_{R} and 8_{L} rotates the crank axle 7. The torque of the crank axle 7 is transmitted through the torsion bar 31, the driving member 33, the first overrunning clutch 35, the bevel gear 34, the sleeve 28, the driving sprocket 10, the chain 12 and the driven sprocket 11 to the rear wheel Wr. The pedaling force detecting means S detects a pedaling force applied to the crank pedals 9_{R} and 9_{L}.

A torque corresponding to the pedaling force applied to the crank pedals 9_{R} and 9_{L} acts on the torsion bar 31 to twist the torsion bar 31 through a predetermined angle relative to the crank axle 7. When the torsion bar 31 is twisted relative to the crank axle 7, the inner slider 61 mounted on the crank axle 7 so as to be axially slidable and restrained from turning relative to the crank axle 7 turns in the direction of the arrow ***a*** relative to the driving member 33 joined to the output end of the torsion bar 31 as shown in Fig. 6. Consequently, the cam surfaces 61₁ of the inner slider 61 are pressed against the cam surfaces 33₁ of the driving member 33, the inner slider 61 is caused to slide in the direction of the arrow ***b*** on the crank axle 7 against the resilience of the spring 67, the outer slider 63 combined with the inner slider 61 pushes the sensor arm 66 at the projections 66₂ to turn the sensor arm 66 on the pivot bolt 64, and then the sensor arm 66 pushes the detecting rod 65₁ of the stroke sensor 65. Since the stroke of the detecting rod 65₁ of the stroke sensor 65 is proportional to the torsional angle of the torsion bar 31 corresponding to the pedaling force applied to the crank pedals 9_{R} and 9_{L'} the pedaling force is determined on the basis of the output of the stroke sensor 65.

Since the pedaling force detecting means S detects the pedaling force applied to the crank pedals 9_{R} and 9_{L} on the basis of the torsional angle of the torsion bar 31 included in the power transmission system for transmitting the pedaling force applied to the crank pedals 9_{R} and 9_{L} to the rear wheel Wr, any members other than those of the power transmission system need not be driven for pedaling force detection, so that the loss of energy can be limited to the least extent. Furthermore, since the torsion bar 31 is extended within and coaxially with the crank axle 7, the pedaling force detecting means S can be formed in a compact, lightweight construction.

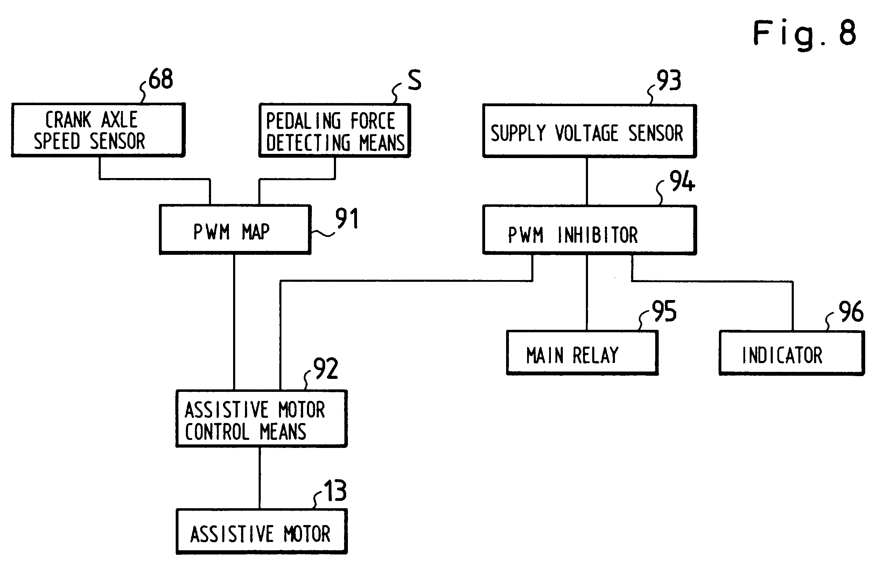

Referring to Fig. 8, a PWM (power with modulation) map 91 is searched to retrieve a map value corresponding to the rotating speed of the crank axle, which represents a traveling speed, detected by a crank axle speed sensor 68 and the pedaling force detected by the pedaling force detecting means S. Then, an assistive motor control means 92 controls the output torque of the assistive motor 13 on the basis of the map value retrieved from the PWM map 91. More concretely, a reference pedaling force to overcome a running resistance corresponding to the traveling speed detected by the crank axle speed sensor 68 is calculated, the difference of the actual pedaling force detected by the pedaling force detecting means S from the reference pedaling force is calculated, and then the assistive motor 13 is controlled so as to provide an output torque corresponding to the difference. Therefore, when an increased pedaling force is applied to the crank pedals 9_{R} and 9_{L} when starting the bicycle, when accelerating the bicycle or when going uphill, the output torque of the assistive motor 13 is increased to reduce the pedaling force so that load on the rider can be reduced. When the pedaling force applied to the crank pedals 9_{R} and 9_{L} is decreased when decelerating the bicycle or when going downhill, the output torque of the assistive motor 13 is reduced to save the energy of the battery 15.

The residual capacity of the battery 15 is monitored continuously on the basis of the output of a supply voltage sensor 93 that detects the supply voltage of the battery 15. If the residual capacity decreases below a predetermined value, a PWM inhibitor 94 limits the current supplied to the assistive motor 13. If the residual capacity decreases further, a main relay 95 opens to stop driving the assistive motor 13. If the residual capacity of the battery 15 decreases to a level not high enough to supply power sufficient to enable the assistive motor 13 to assist the rider effectively for pedaling, an indicator 96 gives an alarm.

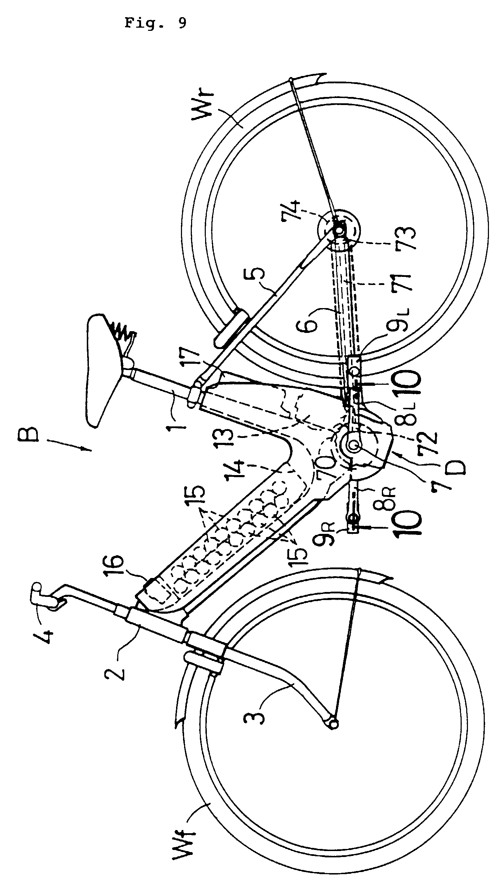

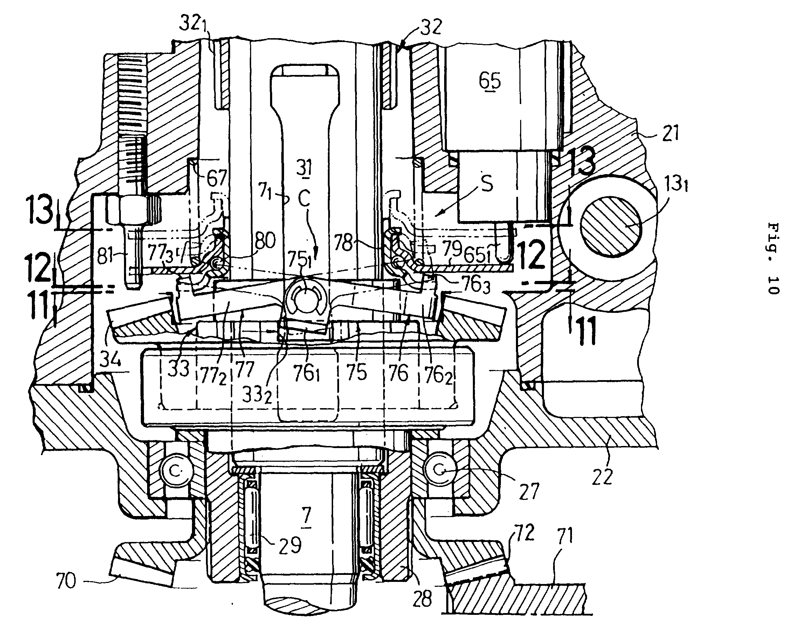

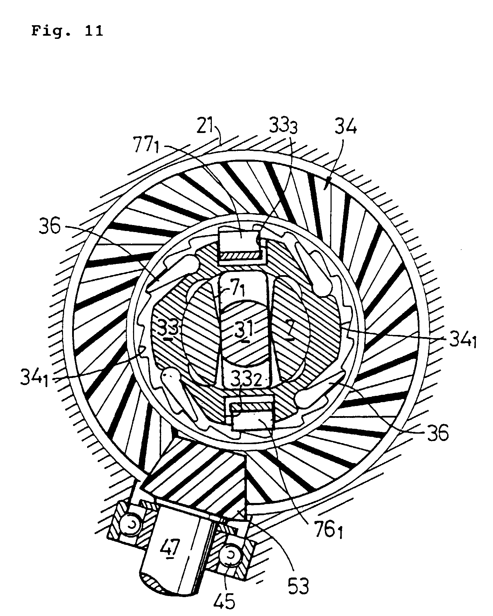

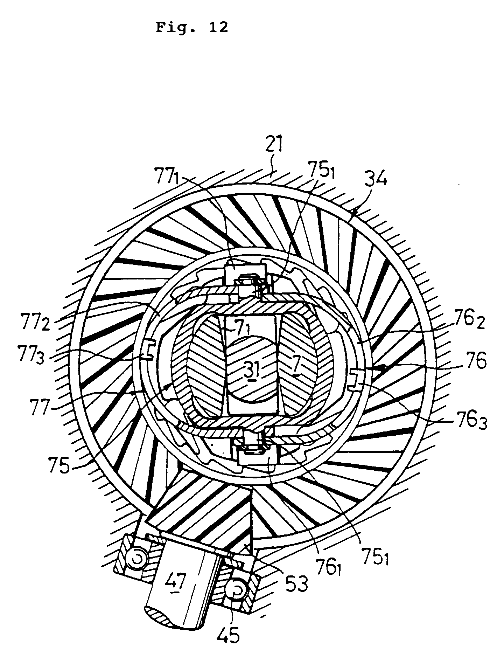

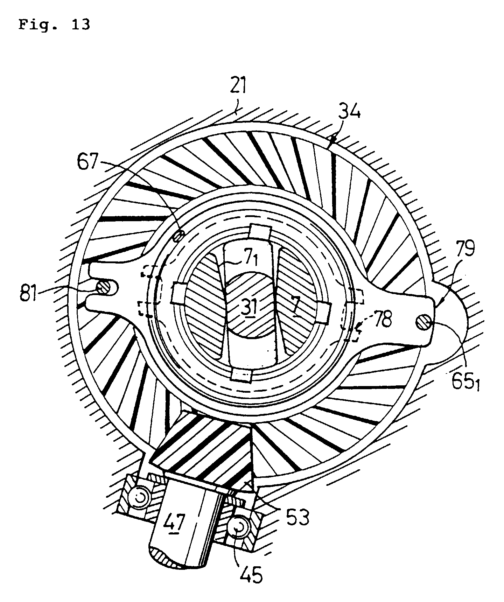

Figs. 9 to 13 illustrate a second embodiment of the present invention, in which Fig. 9 is a general side view of a bicycle, Fig. 10 is an enlarged sectional view taken on line 10-10 in Fig. 9, Fig. 11 is a sectional view taken on line 11-11 in Fig. 10, Fig. 12 is a sectional view taken on line 12-12 in Fig. 10 and Fig. 13 is a sectional view taken on line 13-13 in Fig. 10. A bicycle B incorporating the second embodiment is the same in construction as the bicycle B incorporating the first embodiment, except that the bicycle B incorporating the second embodiment is of a shaft-drive system that drives a rear wheel Wr with a shaft, and a pedaling force detecting means S in the second embodiment is different from the pedaling force detecting means S in the first embodiment.

Referring to Figs. 9 and 10, a bevel gear 70 mounted on a sleeve 28 put on a crank axle 7 so as to be rotatable relative to the crank axle 7 is in engagement with a bevel gear 72 mounted on the front end of a drive shaft 71 longitudinally extended along a rear fork 6, and a bevel gear 73 mounted on the rear end of the drive shaft 71 is in engagement with a bevel gear 74 mounted on the axle of a rear wheel Wr. When the sleeve 28 is rotated by a pedaling force applied to crank pedals 9_{R} and 9_{L} or by the driving force of an assistive motor 13, the torque of the sleeve 28 is transmitted through the drive shaft 71 to the rear wheel Wr.

The construction of a pedaling force detecting means S in the second embodiment will be described hereinafter with reference to Figs. 10 to 13.

A driving member 33 provided with a pair of recesses 33₂ and 33₃ at diametrically opposite positions is put on the crank axle 7 so as to be rotatable relative to the crank axle 7 and to be restrained from axial sliding. An arm holder 75 is fixedly mounted on the crank axle 7 and a pair of pivot pins 75₁ are attached to the arm holder 75 so as to extend radially outward. A pair of arm members 76 and 77 are supported pivotally at their middle parts on the pivot pins 75₁. A driving arm 76₁ extending along the axis of the crank axle 7 from the arm member 76 is in engagement with the recess 33₂ of the driving member 33, a driving arm 77₁ extending along the axis of the crank axle 7 from the arm member 77 is in engagement with the recess 33₃ of the driving member 33. Driven arms 76₂ and 77₂ having the shape of a circular arc extend from the arm members 76 and 77 radially of the crank axle 7 respectively and pressing parts 76₃ and 77₃ are formed at the outer ends of the driven arms 76₂ and 77₂ respectively. The arm holder 75 and the arm members 76 and 77 are the components of a converting means C in accordance with the present invention.

A slider 78 and a sensor arm 79 are put fitly on the crank axle 7 so as to be axially slidable, and balls 80 are held between the slider 78 and the sensor arm 79 to enable the slider 78 and the sensor arm 79 to turn relative to each other. The slider 78 is in engagement with the pressing parts 76₃ and 77₃ of the arm members 76 and 77, so that the slider 78 is caused to slide along the axis of the crank axle 7 when the arm members 76 and 77 turn. A guide bolt 81 is in engagement with one end of the sensor arm 79 to restrain the sensor arm 79 from turning together with the crank axle 7. The other end of the sensor arm 79 is in contact with the detecting rod 65₁ of a stroke sensor 65 held on a left housing 21, and the sensor arm 79 is biased toward the slider 78 by a spring 67.

When a torsion bar 31 is twisted by a pedaling force applied to the crank pedals 9_{R} and 9_{L}, the driving member 33 fixedly combined with the torsion bar 31 turns relative to the arm holder 75 fixedly mounted on the crank axle 7. Then, the arm members 76 and 77 having the driving arms 76₁ and 77₁ in engagement with the recesses 33₂ and 33₃ of the driving member 33 turn on the pivot pins 75₁ from positions indicated by continuous lines to positions indicated by alternate long and two short dashes lines in Fig. 10. When the arm members 76 and 77 turn according to the torsional angle of the torsion bar 31, the pressing parts 76₃ and 77₃ of the driven arm 76₂ and 77₂ press the slider 78 and the sensor arm 79 for sliding along the axis of the crank axle 7, whereby the detecting rod 65₁ of the stroke sensor 65 is pressed to detect the pedaling force applied to the crank pedals 9_{R} and 9_{L}.

Although the preferred embodiments of the present invention have been described, the present invention is not limited thereto and various changes in design may be made therein.

As is apparent from the foregoing description, according to the invention stated in claim 1, the pedaling force detecting means for detecting the pedaling force applied to the crank pedals comprises the torsion bar disposed within and coaxially with the crank axle to be rotated by working the crank pedals and having one end joined to the crank axle and the other end connected to the assistive motor and the wheel, the converting means for converting the torsional angle of the torsion bar into a corresponding axial displacement of the crank axle, and the sensor for detecting the axial displacement. Thus, the pedaling force can be detected by the pedaling force detecting means comprising a comparatively small number of parts and having a compact, lightweight construction. Furthermore, since the torsion bar stores the energy used for twisting the torsion bar, no mechanical energy is lost and the limited human power can be effectively utilized.

According to the invention stated in claim 2, the converting means comprises the driving member fitly put on the crank axle so as to be rotatable relative to the crank axle and to be restrained from axial sliding and connected to the other end of the torsion bar, and the driven member put on the crank axle so as to the axially slidable and to be restrained from rotation relative to the crank axle and engaged with the driving member by a cam mechanism. Therefore, the torsional angle of the torsion bar can be accurately converted into a corresponding axial displacement of the driven member and hence the pedaling force applied to the crank pedals can be accurately detected.

According to the invention stated in claim 3, the converting means comprises the driving member fitly put on the crank axle so as to be rotatable relative to the crank axle and to be restrained from axial sliding and connected to the other end of the torsion bar, an arm holder fitly put on the crank axle so as to be restrained from rotation and sliding relative to the crank axle, and the arm members respectively having driving arms extending along the axis of the crank axle and in engagement with the driving member, and driven arms extending radially of the crank axle.

## Claims

1. A pedalling force detector arrangement (S) for a motor-assisted bicycle, said motor-assisted bicycle comprising:
- a power transmission system (D) for transmitting a pedalling force applied to crank pedals (9_{R}, 9_{L}), to a wheel (Wr) and an assistive motor (13) incorporated into the power transmission system (D), an output of said assistive motor (13) being controlled on the basis of a pedalling force applied to the crank pedals (9_{R}, 9_{L}) and detected by a pedalling force detecting arrangement (S),
said pedalling force detector arrangement (S) comprising:
- a crank axle (7) driven for rotation by operating the crank pedals (9_{R}, 9_{L}),
- a torsion bar (31) disposed coaxially within said crank axle (7), a first end of said torsion bar (31) being connected to the crank axle (7) and a second end of said torsion bar (31) being connected to the assistive motor (13) and the wheel (Wr),
- a converting means (C) for converting the angle of torsion of the torsion bar (31) into a corresponding axial displacement of a displacement means (61; 76₂, 77₂) with respect to said crank axle (7),
- a displacement sensor (65) for detecting the axial displacement of the displacement means (61; 76₂, 77₂).

2. Pedalling force detector arrangement according to claim 1, wherein the converting means (C) comprises:
a driving member (33) fitly put on the crank axle (7) so as to be rotatable relative to the crank axle (7) and to be restrained from axial sliding, and connected to the second end of the torsion bar, and a driven member (61) fitly put on the crank axle (7) so as to be axially slidable and to be restrained from rotation relative to the crank axle (7), and interlocked with the driving member (33) by a cam mechanism, the driven member (61) being movable axially on the crank axle (7) as said displacement means (61) in accordance with the torsion of the torsion bar (31).

3. Pedaling force detector arrangement according to claim 1, wherein the converting means (C) comprises:
a driving member (33) fitly put on the crank axle (7) so as to be rotatable relative to the crank axle (7) and to be restrained from axial sliding, and connected to the second end of the torsion bar (31), an arm holder (75) fitly put on the crank axle (7) so as to be restrained from rotation and sliding relative to the crank axle (7), and arm members (76, 77) having driving arms (76₁, 77₁) pivotally supported at their middle parts on the arm holder (75), extended axially of the crank axle (7) and in engagement with the driving member (33), and driven arms (76₂, 77₂) extended radially of the crank axle (7), said driven arms (76₂, 77₂) being axially displaceable as said displacement means (76₂, 77₂) with respect to the crank axle (7) in accordance with the torsion of the torsion bar (31).

## Patentansprüche

1. Pedalkraftdetektoranordnung (S) für ein motorunterstütztes Fahrrad, wobei das motorunterstützte Fahrrad umfaßt:
- ein Kraftübertragungssystem (D) zum Übertragen einer auf Kurbelpedale (9_{R}, 9_{L}) ausgeübten Pedalkraft zu einem Rad (Wr) und einem Hilfsmotor (13), der in das Kraftübertragungssystem (D) integriert ist, wobei eine Abgabe des Hilfsmotors (13) auf der Basis einer auf die Kurbelpedale (9_{R}, 9_{L}) ausgeübten und durch eine Pedalkrafterfassungsanordnung (S) erfaßten Pedalkraft gesteuert wird,
wobei die Pedalkraftdetektoranordnung (S) umfaßt:
- eine durch Betätigung der Kurbelpedale (9_{R}, 9_{L}) drehangetriebene Kurbelachse (7),
- einen Torsionsstab (31), der koaxial in der Kurbelachse (7) angeordnet ist, wobei ein erstes Ende des Torsionsstabs (31) mit der Kurbelachse (7) verbunden ist und ein zweites Ende des Torsionsstabs (31) mit dem Hilfsmotor (13) und dem Rad (Wr) verbunden ist,
- Wandlungsmittel (C) zum Wandeln des Torsionswinkels des Torsionsstabs (31) in eine entsprechende axiale Verlagerung eines Verlagerungsmittels (61; 76₂, 77₂) relativ zu der Kurbelachse (7),
- einen Verlagerungssensor (65) zum Erfassen der axialen Verlagerung des Verlagerungsmittels (61; 76₂, 77₂).

2. Pedalkraftdetektoranordnung nach Anspruch 1, wobei die Wandlungsmittel (C) umfassen:
ein antreibendes Teil (33), das derart passend auf die Kurbelachse (7) gesetzt ist, daß es relativ zu der Kurbelachse (7) drehbar ist und in einer axialen Verschiebung gehemmt ist, und das mit dem zweiten Ende des Torsionsstabs verbunden ist, und ein angetriebenes Teil (61), das derart passend auf die Kurbelachse (7) gesetzt ist, daß es axial verschiebbar ist und in einer Drehung relativ zu der Kurbelachse (7) gehemmt ist, und das durch einen Steuerflächenmechanismus mit dem antreibenden Teil (33) gekoppelt ist, wobei das angetriebene Teil (61) entsprechend der Torsion des Torsionsstabs (31) als das Verlagerungsmittel (61) auf der Kurbelachse (7) axial bewegbar ist.

3. Pedalkraftdetektoranordnung nach Anspruch 1, wobei die Wandlungsmittel (C) umfassen:
ein antreibendes Teil (33), das derart passend auf die Kurbelachse (7) gesetzt ist, daß es relativ zu der Kurbelachse (7) drehbar ist und in einer axialen Verschiebung gehemmt ist, und das mit dem zweiten Ende des Torsionsstabs (31) verbunden ist, einen Armhalter (75), der derart passend auf die Kurbelachse (7) gesetzt ist, daß er in einer Drehung und einer Verschiebung relativ zu der Kurbelachse (7) gehemmt ist, und Armteile (76, 77) mit antreibenden Armen (76₁, 77₁), die in ihren Mittelteilen an dem Armhalter (75) drehbar gehalten sind, der sich axial von der Kurbelachse (7) und im Eingriff mit dem antreibenden Teil (33) erstreckt, und angetriebene Arme (76₂, 77₂), die sich radial von der Kurbelachse (7) erstrecken, wobei die angetriebenen Arme (76₂, 77₂) entsprechend der Torsion des Torsionsstabs (31) als das Verlagerungsmittel (76₂, 77₂) relativ zur Kurbelachse (7) axial verlagerbar sind.

## Revendications

1. Un agencement de détecteur de force de pédalage (S) pour une bicyclette assistée à moteur, ladite bicyclette assistée à moteur comprenant :
- un système de transmission de puissance (D) pour transmettre une force de pédalage appliquée aux pédales de pédalier (9_{R}, 9_{L}) à une roue (Wr) et un moteur d'assistance (13) incorporé dans le système de transmission de puissance (D), une sortie dudit moteur d'assistance (13) étant commandée sur la base de la force de pédalage, appliquée aux pédales de pédalier (9_{R}, 9_{L}) et détectée par un agencement de détection de force de pédalage (S),
ledit agencement détecteur de force de pédalage (S) comprenant :
- un arbre de pédalier (7) entraîné en rotation par l'actionnement des pédales de pédalier (9_{R}, 9_{L}),
- une barre de torsion (31) disposée coaxialement dans ledit arbre de pédalier (7), une première extrémité de ladite barre de torsion (31) étant reliée à l'arbre de pédalier (7) et une deuxième extrémité de ladite barre de torsion (31) étant reliée au moteur d'assistance (13) et à la roue (Wr),
- des moyens de conversion (C) pour convertir l'angle de torsion de la barre de torsion (31) en un déplacement axial correspondant de moyens de déplacement (61; 76₂,77₂) par rapport audit arbre de pédalier (7),
- un capteur de déplacement (65) pour détecter le déplacement axial des moyens de déplacement (61; 76₂, 77₂).

2. Un agencement de détecteur de force de pédalage selon la revendication 1, dans lequel les moyens de conversion (C) comprennent :
un organe d'entraînement (31) placé par insertion sur l'arbre de pédalier (7) de manière à pouvoir tourner par rapport à l'arbre de pédalier (7) et à être empêché d'effectuer un coulissement axial, et relié à la deuxième extrémité de la barre de torsion et un organe entraîné (61) placé par insertion sur l'arbre de pédalier (7), de manière à être coulissant axialement et à être empêché de tourner par rapport à l'arbre de pédalier (7), et interverrouillé avec l'organe d'entraînement (31) par un mécanisme de came, l'organe entraîné (61) étant déplaçable axialement sur l'arbre de pédalier (7) comme lesdits moyens de déplacement (61) selon la torsion de la barre de torsion (31).

3. Agencement détecteur de force de pédalage selon la revendication 1, dans lequel les moyens de conversion (C) comprennent :
un organe d'entraînement (33) placé par insertion sur l'arbre de pédalier (7) de manière à pouvoir tourner par rapport à l'arbre de pédalier (7) et à être empêché de coulisser axialement, et relié à la deuxième extrémité de la barre de torsion (31), un support de bras (75) placé par insertion sur l'arbre de pédalier (7) de manière à être empêché de tourner et de coulisser par rapport à l'arbre de pédalier (7) et des organes formant bras (76, 77) ayant des bras d'entraînement (76₁, 77₁) supportés à pivotement au niveau de leurs parties médianes sur le support de bras (75), s'étendant axialement depuis l'arbre de pédalier (7) et au contact de l'organe d'entraînement (33), et des bras entraînés (76₂, 77₂) s'étendant radialement depuis l'arbre de pédalier (7) lesdits bras entraînés (76₂, 77₂) étant déplaçables axialement comme lesdits moyens de déplacement (76₂, 77₂) par rapport à l'arbre de pédalier (7) selon la torsion de la barre de torsion (31).
